(19) Europäisches Patentamt
European Patent Office
Office européen des brevets

(11) **EP 3 591 016 A1**

(12) **EUROPEAN PATENT APPLICATION**
published in accordance with Art. 153(4) EPC

(43) Date of publication:
08.01.2020 Bulletin 2020/02

(21) Application number: 18761132.2

(22) Date of filing: 27.02.2018

(51) Int Cl.:
*C09D 11/52* (2014.01)   *B22F 1/02* (2006.01)
*B22F 9/00* (2006.01)   *C08K 7/06* (2006.01)
*C08K 9/04* (2006.01)   *C08L 1/28* (2006.01)

(86) International application number:
**PCT/JP2018/007198**

(87) International publication number:
**WO 2018/159593 (07.09.2018 Gazette 2018/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: 28.02.2017 JP 2017037660

(71) Applicant: DOWA Electronics Materials Co., Ltd.
**Tokyo 101-0021 (JP)**

(72) Inventors:
• **SATO, Kimitaka**
  **Tokyo 101-0021 (JP)**
• **KODAMA, Daisuke**
  **Tokyo 101-0021 (JP)**
• **KURITA, Satoru**
  **Tokyo 101-0021 (JP)**

(74) Representative: **Klang, Alexander H.**
**Wagner & Geyer Partnerschaft mbB
Patent- und Rechtsanwälte
Gewürzmühlstrasse 5
80538 München (DE)**

(54) **NANO-SILVER WIRE INK**

(57)    [Problem] To provide a silver nanowire ink that is capable of stably suppressing the decrease in conductivity of the silver nanowire conductive layer caused by coating a coating liquid for forming a transparent conductive layer.

[Solution] A silver nanowire ink containing a water soluble cellulose ether having a methoxy group, and silver nanowires, in an aqueous solvent, the water soluble cellulose ether having a mass proportion of a methoxy group of from 16.0 to 25.0%. Particularly preferred examples of the water soluble cellulose ether include HP-MC having a mass proportion of a hydroxypropoxy group of 10.0% or less and HEMC having a mass proportion of a hydroxyethoxy group of 12.0% or less.

EP 3 591 016 A1

**Description**

Technical Field

The present invention relates to a silver nanowire ink that is useful as a material for forming a transparent conductor circuit.

Background Art

In the description herein, fine metal wires having a thickness of approximately 200 nm or less are referred to as "nanowires". In particular, silver nanowires are expected as a conductive material for forming a transparent conductor circuit. A liquid having dispersed therein silver nanowires, having a thickening component and the like mixed therein in consideration of coating on a substrate is referred to as a "silver nanowire ink". An operation of adding a thickening component and the like to a liquid having dispersed therein silver nanowires, so as to form an ink having prescribed properties is referred to as "ink formation". A conductive coated film layer that is formed by coating a silver nanowire ink is referred to as a "silver nanowire conductive layer".

In the production of a transparent conductive circuit using silver nanowires, it is a general practice that a silver nanowire conductive layer is formed on a transparent substrate, represented by PET (polyethylene terephthalate), PC (polycarbonate), and the like, and a transparent protective layer is formed further thereon. The transparent protective layer has a function enhancing the adhesiveness of the silver nanowires to the substrate, and includes a type that is formed as an underlayer of a resist layer, and a type that also has a function of a resist layer in combination. For example, PTL 1 describes, as the later type, an example of a transparent protective layer that is formed by coating an alcohol solution having dissolved therein an ultraviolet ray-curable acrylate resin (paragraphs 0087 to 0088).

Citation List

Patent Literature

PTL 1: JP-A-2013-202911

Summary of Invention

Technical Problem

In the case where a coating liquid for forming a transparent protective layer is coated on a silver nanowire conductive layer, there are cases where the silver nanowire conductive layer is slightly expanded during the period until subjecting to a patterning process for forming a circuit. The partial breakage of contact among the silver nanowires due to the expansion may decrease the conductivity of the conductive layer. For avoiding the problem of the decrease in conductivity, such methods are effective as (i) a method of performing a patterning process immediately after the formation of the transparent protective layer, so as to suppress the expansion of the silver nanowire conductive layer to the minimum, and (ii) a method of sufficiently increasing the silver nanowire concentration in the silver nanowire conductive layer in advance, so as to ensure the necessary conductivity even after the silver nanowire conductive layer is expanded. However, the case (i) requires the tightening of the production management and the introduction of a continuous processing equipment, and thus is restricted in the operational stability and the equipment investment in the new commercial production. In the case (ii), the haze of the conductive layer is increased along with the increase of the amount of the silver nanowires used, and thus it is difficult to meet the severe needs in recent years that strongly demand both the "enhancement of the conductivity" and the "enhancement of the visibility".

An object of the invention is to provide a silver nanowire ink that is capable of stably suppressing the decrease in conductivity of the silver nanowire conductive layer caused by coating a coating liquid for forming a transparent conductive layer.

Solution to Problem

According to the investigations by the present inventors, the "swelling" of the thickening component present in the silver nanowire ink may be considered as a cause of the aforementioned occurrence of the slight expansion of the silver nanowire conductive layer caused by coating a coating liquid for forming a transparent protective layer on the conductive layer. It is expected that the swelling is caused by an organic solvent used in the coating liquid for forming a transparent protective layer. Therefore, various studies have been made on the thickening component used in a silver nanowire ink using an aqueous solvent from the standpoint of the balance between the affinity to an organic solvent and the water solubility. As a result, it has been found that the use of a water soluble cellulose ether controlled to have an abundance of a methoxy group (-OCH$_3$) of 25.0% by mass or less as a thickening component is significantly effective for suppressing the swelling. However, it has also been found that the abundance of a methoxy group is necessarily 16.0% by mass or more for sufficiently ensuring the solubility in an aqueous solvent.

Examples of the water soluble cellulose ether include HPMC (hydroxypropyl methyl cellulose) and HEMC (hydroxyethyl methyl cellulose), which are relatively easily available. HPMC has a hydroxypropoxy group (-OCH$_2$CHOHCH$_3$) in addition to a methoxy group. The use of HPMC having an abundance of a hydroxypropoxy group of 10.0% by mass or less is further effective for suppressing the swelling. HEMC has a hydroxyethoxy group (-OCH$_2$CH$_2$OH) in addition to a methoxy group. The use of HEMC having an abundance of a hydroxyethoxy group of 12.0% by mass or less is further effective for suppressing the swelling. The invention has been completed based on the knowledge.

In the description herein, the following inventions are described for achieving the aforementioned object.

[1] A silver nanowire ink containing a water soluble cellulose ether having a methoxy group, and silver nanowires, in an aqueous solvent, the water soluble cellulose ether having a mass proportion of a methoxy group of from 16.0 to 25.0%.

[2] The silver nanowire ink according to the item [1], wherein the silver nanowire ink has a mixing ratio of the water soluble cellulose ether of from 0.1 to 5.0 parts by mass per 1.0 part by mass of silver.

[3] The silver nanowire ink according to the item [1] or [2], wherein the aqueous solvent is a mixed solvent of water and an alcohol, and the silver nanowire ink has a content of the alcohol of from 1.0 to 35.0% by mass.

[4] The silver nanowire ink according to any one of the items [1] to [3], wherein the silver nanowires have an average length of 10.0 μm or more and an average aspect ratio shown by a ratio of an average length and an average diameter of 200 or more.

[5] The silver nanowire ink according to any one of the items [1] to [4], wherein the silver nanowires are coated with a copolymer of vinylpyrrolidone and a hydrophilic monomer.

[6] The silver nanowire ink according to any one of the items [1] to [4], wherein the silver nanowires are coated with PVP (polyvinylpyrrolidone).

[7] The silver nanowire ink according to any one of the items [1] to [6], wherein the silver nanowire ink contains one or more of HPMC (hydroxypropyl methyl cellulose) and HEMC (hydroxyethyl methyl cellulose) as the water soluble cellulose ether.

[8] The silver nanowire ink according to any one of the items [1] to [6], wherein the water soluble cellulose ether having a methoxy group is HPMC (hydroxypropyl methyl cellulose), and the HPMC has a mass proportion of a methoxy group of from 16.0 to 25.0% and a mass proportion of a hydroxypropoxy group of 10.0% or less.

[9] The silver nanowire ink according to any one of the items [1] to [6], wherein the water soluble cellulose ether having a methoxy group is HEMC (hydroxyethyl methyl cellulose), and the HEMC has a mass proportion of a methoxy group of from 16.0 to 25.0% and a mass proportion of a hydroxyethoxy group of 12.0% or less.

The "aqueous solvent" herein means a solvent that contains water, or a mixed solution of water and a water soluble substance, and has a mixing ratio of water in the substances constituting the solvent of 30% by mass or more.

In the description herein, the average length, the average diameter, and the average aspect ratio of the silver nanowires are in accordance with the following definitions.

[Average Length]

On a micrograph (such as an FE-SEM micrograph), the trace length from one end to the other end of one silver nanowire is designated as the length of the wire. The value obtained by averaging the lengths of the respective silver nanowires present on the micrograph is designated as the average length. For calculating the average length, the total number of the wires to be measured is 100 or more. A wire-like product having a length of less than 1.0 μm and a particulate product having a ratio of the length of the longest portion (which may be referred to as a "major diameter") and the length of the longest portion in the direction perpendicular to the major diameter (which may be referred to as a "minor diameter") (the ratio may be referred to as an "axial ratio") of less than 5.0 are excluded from the measurement.

[Average Diameter]

On a micrograph (such as an FE-SEM micrograph), the average width between the contours on both sides in the thickness direction of one silver nanowire is designated as the diameter of the wire. The value obtained by averaging the diameters of the respective silver nanowires present on the micrograph is designated as the average diameter. For calculating the average diameter, the total number of the wires to be measured is 100 or more. A wire-like product having a length of less than 1.0 μm and a particulate product having an axial ratio of less than 5.0 are excluded from the measurement.

[Average Aspect Ratio]

The average aspect ratio is calculated by substituting the average diameter and the average length for the following expression (1).

$$(average \; aspect \; ratio) = (average \; length \; (nm)) \; / \; (average \; diameter \; (nm)) \quad (1)$$

Advantageous Effects of Invention

The silver nanowire ink of the invention has a capability capable of significantly suppressing stably the expansion phenomenon of the silver nanowire conductive layer, which is considered to be caused by the solvent of the coating liquid for a transparent protective layer in the formation of a transparent conductive circuit. The breakage of contact among the silver nanowires due to the expansion of this type can be largely decreased, and thus the conductivity of the transparent conductive circuit can be retained to a high level. There is no necessity of increasing the silver nanowire concentration in the silver nanowire conductive layer excessively under assumption of the breakage of contact among the silver nanowires, and thus the silver nanowire ink of the invention is significantly useful for the formation of a transparent conductor that has high conductivity and less haze.

Description of Embodiments

[Aqueous Solvent]

As an organic protective agent used for the production of silver nanowires, PVP (polyvinylpyrrolidone) has been well known, and in recent years, there is an example using a copolymer of vinylpyrrolidone and another monomer. Silver nanowires having the organic protective agent attached thereto generally have good dispersibility in water, and a silver nanowire ink is frequently provided in the form using water as a solvent. For ensuring the wettability to a transparent substrate, such as PET, it is advantageous to use a solvent obtained by adding an alcohol to water. The invention targets a silver nanowire ink using the aqueous solvent.

In the description herein, as having been described above, the "aqueous solvent" means a solvent that contains water, or a mixed solution of water and a water soluble substance, and has a mixing ratio of water of 30% by mass or more. The water soluble cellulose ether used as a thickening component described later is well dissolved in water, and generally exhibits industrially practical solubility for a mixed solvent of water and an alcohol or the like with a mixing ratio of water of 30% by mass or more. Accordingly, a solvent that has a mixing ratio of water of 30% by mass or more is applied to the "aqueous solvent" herein. A solvent that has a mixing ratio of water of 50% by mass or more may also be applied.

In the case where the aqueous solvent is a "mixed solvent of water and an alcohol", the alcohol preferably has such a polarity that provides a solubility parameter (SP value) of 10 or more. A low boiling point alcohol, such as methanol, ethanol, and 2-propanol (isopropyl alcohol), may be preferably used. The SP values thereof are said to be 23.4 for water, 14.5 for methanol, 12.7 for ethanol, and 11.5 for 2-propanol. In the case where a mixed solvent of water and an alcohol is used, the ink preferably has an alcohol content in the ink controlled to a range of from 1.0 to 35.0% by mass. In the case where the wettability to a substrate, such as PET, is important, the alcohol content is preferably 2.0% by mass or more, and more preferably 5.0% by mass or more.

[Water Soluble Cellulose Ether]

A silver nanowire ink using an aqueous solvent generally contains a thickening component added thereto for imparting properties suitable for a coating liquid. An ink having a water soluble cellulose ether as a thickening component is targeted herein. The water soluble cellulose ether has water solubility imparted thereto by substituting a large proportion of hydrogen atoms of OH groups of cellulose by a substituent. For example, the substitution of a hydrogen atom of a OH group by a methyl group ($-CH_3$) forms a methoxy group ($-OCH_3$), the substitution by a hydroxypropyl group ($-CH_2CHOHCH_3$) forms a hydroxypropoxy group ($-OCH_2CHOHCH_3$), and the substitution by a hydroxyethyl group

(-CH$_2$CH$_2$OH) forms a hydroxyethoxy group (-OCH$_2$CH$_2$OH). In the portion having the substituent, the hydrogen bond between the cellulose molecules is not formed to provide thereby a space where water molecules intervene between the cellulose molecules, and thus water solubility is exhibited.

In the invention, a water soluble cellulose ether having a methoxy group (-OCH$_3$) is applied. The water soluble cellulose ether of this kind is also suitable for ensuring the dispersibility of silver nanowires in the aqueous solvent. According to the investigations by the inventors, in the case where the mass proportion of a methoxy group in the water soluble cellulose ether is less than 16.0%, the solubility of the water soluble cellulose ether in the aqueous solvent is decreased, and associated thereto, a situation that the entire amount of the water soluble cellulose ether required for providing the optimum viscosity that is desired for preparing a silver nanowire ink for coating cannot be completely dissolved in the aqueous solvent tends to occur. In this case, the optimum viscosity cannot be obtained, and the design of the ink composition may be restricted. Accordingly, the mass proportion of a methoxy group in the water soluble cellulose ether is restricted to 16.0% or more herein, and is more preferably 19.0% or more. With a larger mass proportion of a methoxy group, the water solubility is enhanced.

In the case where the amount of a methoxy group is large, on the other hand, it is considered that the affinity to an organic solvent contained in a coating liquid for forming a transparent protective layer (such as a coating material containing an ultraviolet ray-curable acrylic resin as a major component) is increased, and the expansion phenomenon of the silver nanowire conductive layer caused by the swelling of the water soluble cellulose ether (described above) becomes conspicuous. The expansion phenomenon becomes a factor causing decrease in conductivity of the transparent conductive circuit. As a result of the various investigations, for avoiding the problem caused by the swelling, it has been found that it is significantly effective to manage strictly the mass proportion of a methoxy group in the water soluble cellulose ether to 25.0% or less. Two or more kinds of the water soluble cellulose ethers each having a mass proportion of a methoxy group within the range may be used in combination as an ink component.

Examples of the preferred kind of the water soluble cellulose ether include HPMC (hydroxypropyl methyl cellulose) and HEMC (hydroxyethyl methyl cellulose). HPMC has a hydroxypropoxy group (-OCH$_2$CHOHCH$_3$) in addition to a methoxy group. HEMC has a hydroxyethoxy group (-OCH$_2$CH$_2$OH) in addition to a methoxy group. A hydroxypropoxy group and a hydroxyethoxy group also have a function enhancing the water solubility, but the amount thereof is preferably small from the standpoint of the suppression of the aforementioned swelling. In the case where HPMC is used as the water soluble cellulose ether, HPMC that has an abundance of a hydroxypropoxy group of 10.0% by mass or less is preferably targeted. In the case where HEMC is used as the water soluble cellulose ether, HEMC that has an abundance of a hydroxyethoxy group of 12.0% by mass or less is preferably targeted.

The mass proportions of the methoxy group, the hydroxypropoxy group, and the hydroxyethoxy group in the water soluble cellulose ether may be measured by a gas chromatography test according to the quantitative determination method of methyl cellulose and hydroxypropyl methyl cellulose described in the Japanese Pharmacopoeia 16th edition, as described in JP-A-2014-133722, paragraph 0014.

The content of the water soluble cellulose ether in the ink is preferably controlled to a range of from 0.01 to 2.00% by mass. In the case where the content of the water soluble cellulose ether is too small, a problem tends to occur in coating, for example, the viscosity of the ink that is necessary for forming a coated film cannot be ensured. In the case where the content of the water soluble cellulose ether is too large, the coated film tends to cause blur or unevenness due to the excessive viscosity of the ink. The mass proportion thereof to silver is preferably such a value that the ink composition is controlled to make a mixing ratio of the water soluble cellulose ether of from 0.1 to 5.0 parts by mass per 1.0 part by mass of silver.

[Silver Nanowires]

The silver nanowires preferably have a shape that is thin and long as much as possible from the standpoint of the formation of a transparent conductive coated film excellent in conductivity and visibility. For example, the silver nanowires preferably have an average diameter of 50 nm or less and an average length of 10 μm or more. The silver nanowires having an average diameter of 30 nm or less and an average length of 10 μm or more are more preferably used. The average aspect ratio thereof is preferably 200 or more, and more preferably 450 or more.

The thin and long silver nanowires can be obtained by the known method (alcohol solvent reduction method), in which silver is deposited in the form of wire by utilizing the reduction power of an alcohol as a solvent in an alcohol solvent in the presence of an organic protective agent. The organic protective agent used may be PVP and a copolymer of vinylpyrrolidone and another monomer. The surface of the silver nanowires generally has attached thereon the organic protective agent used in the synthesis thereof, and the organic protective agent achieves the dispersibility thereof in a liquid.

The copolymer of vinylpyrrolidone and another monomer can enhance the dispersibility in an aqueous solvent having an alcohol added thereto, as compared to PVP. It may be important that the copolymer has a structural unit of a hydrophilic monomer. The hydrophilic monomer herein means a monomer that has a property that 1 g or more of the monomer is dissolved in 1,000 g of water at 25°C. Specific examples thereof include a diallyldimethylammonium salt monomer, an acrylate or methacrylate monomer, and a maleimide monomer. Examples of the acrylate or methacrylate monomer include ethyl acrylate, 2-hydroxyethyl acrylate, and 2-hydroxyethyl methacrylate. Examples of the maleimide monomer include 4-hydroxybutyl acrylate, N-methylmaleimide, N-ethylmaleimide, N-propylmaleimide, and N-tert-butylmaleimide.

The silver nanowires can be synthesized by a known alcohol solvent reduction method (for example, the method described in JP-A-2015-180772). The reaction liquid (slurry) after the synthesis is subjected to solid-liquid separation, such as decantation, and then sufficiently cleaned to provide silver nanowires to be subjected to the subsequent process. Silver nanowires or a dispersion liquid thereof available as an industrial product may be procured and used.

[Silver Content in Ink]

The content of the silver nanowires in the ink is preferably controlled to a range of from 0.02 to 1.0% by mass in terms of mass proportion of silver in the total mass of the ink.

[Binder Component]

The silver nanowire ink may contain a binder component depending on necessity. As a material that functions as a binder without impairing the dispersibility of the nanowires and is excellent in conductivity, light transmittance, and adhesiveness, for example, at least one of a water soluble acrylic-urethane copolymer resin and a water soluble urethane resin may be contained. The total content of the water soluble acrylic-urethane copolymer resin and the water soluble urethane resin in the ink (which is the mass proportion with respect to the total mass of the ink including the silver nanowires) is preferably controlled to a range of from 0.01 to 2.0% by mass.

Examples of the binder containing the water soluble acrylic-urethane copolymer as a component include "UC90", produced by Alberdingk Boley, Inc., "Adeka Bontighter HUX-401", produced by Adeka Corporation, and "NeoPac™ E-125", produced by DSM Coating Resins, LLC.

The binder containing the water-soluble urethane resin added is preferably a urethane resin colloid or a urethane resin dispersion. Examples thereof include Superflex 130, Superflex 150HS, Superflex 170, Superflex 210, Superflex 300, Superflex 500M, Superflex 420, Superflex 820, Superflex E-2000, and Superflex R-5002, all produced by DSK Co., Ltd., Hydran AP-30, Hydran WLS-213, Vondic 1980NE, Hydran WLS-602, and Hydran WLS-615, all produced by DIC Corporation, Adeka Bontighter HUX-561S, Adeka Bontighter HUX-350, Adeka Bontighter HUX-282, Adeka Bontighter HUX-830, Adeka Bontighter HUX-895, and Adeka Bontighter HUX-370, all produced by Adeka Corporation, NeoPac™ R-600, NeoPac™ R-650, NeoPac™ R-967, NeoPac™ R-9621, and NeoPac™ R-9330, all produced by DSM Coating Resins, LLC, Resamine D-4090, Resamine D-6065NP, Resamine D-6335NP, and Resamine D-9087, all produced by Dainichiseika Color & Chemicals Mfg Co., Ltd., Tafigel PUR80, Tafigel PUR41, and Tafigel PUR61, all produced by Munzing Chemie GmbH, and Nostecker 400, Nostecker 1200, Evafanol HA-50C, Evafanol HA-170, Evafanol AP-12, and Evafanol APC-55, all produced by Nicca Chemical Co., Ltd.

Examples

[Example 1]

(Synthesis of Silver Nanowires)

Silver nanowires were obtained in the following manner.

Propylene glycol (1,2-propanediol) as an alcohol solvent, silver nitrate as a silver compound, lithium chloride as a chloride, potassium bromide as a bromide, aluminum nitrate nonahydrate as an aluminum salt, lithium hydroxide as an alkali metal hydroxide, and a copolymer of vinylpyrrolidone and diallyldimethylammonium nitrate (copolymer produced with 99% by mass of vinylpyrrolidone and 1% by mass of diallyldimethylammonium nitrate, weight average molecular weight: 75,000) as an organic protective agent were prepared.

At ordinary temperature, 0.484 g of lithium chloride, 0.1037 g potassium bromide, 0.426 g of lithium hydroxide, 4.994 g of a propylene glycol solution containing 20% by mass of aluminum nitrate nonahydrate, and 83.875 g of the copolymer of vinylpyrrolidone and diallyldimethylammonium nitrate were added to 8,016 g of propylene glycol, and dissolved to provide a solution A. In a separate vessel, 67.96 g of silver nitrate was added to a mixed solvent of 95.7 g of propylene glycol and 8.0 g of pure water, and dissolved under stirring at 35°C to provide a silver-containing liquid (solution B).

The solution A was placed in a reaction vessel and heated from ordinary temperature to 90°C under stirring in the air, and then the entire amount of the solution B was added to the solution A over 1 minute. After completing the addition of the solution B, the reaction liquid was further retained under the stirring state at 90°C for 24 hours. Thereafter, the reaction liquid was cooled to ordinary temperature.

A 1 L portion was collected from the reaction liquid having been cooled to ordinary temperature, and transferred to a PFA bottle having a capacity of 35 L, to which 20 kg of acetone was added, followed by stirring for 15 minutes. Thereafter, the mixture was allowed to stand for 24 hours.

After standing, a concentrate and a supernatant were observed, and the supernatant was removed to recover the concentrate. An appropriate amount of a 1% by mass PVP aqueous solution was added to the resulting concentrate, followed by stirring for 3 hours, and then it was confirmed that the silver nanowires were redispersed. After stirring, 2 kg of acetone was added thereto, followed by stirring for 10 minutes, and then the mixture was allowed to stand. After standing, a concentrate and a supernatant were newly observed, and the supernatant was removed to recover the concentrate. 160 g of pure water was added to the resulting concentrate to redisperse the silver nanowires. 2 kg of acetone was added to the redispersed silver nanowire dispersion liquid, and then the mixture was stirred for 30 minutes and then allowed to stand. After standing, a concentrate and a supernatant were newly observed, and the supernatant was removed to recover the concentrate. An appropriate amount of a 0.5% by mass PVP aqueous solution was added to the resulting concentrate, followed by stirring for 12 hours.

The silver nanowire-containing liquid having been stirred for 12 hours was diluted with pure water to control the silver nanowire content to 0.01% by mass. A silver nanowire-containing liquid after cleaning was thus obtained in this manner. The silver nanowires were prepared in an amount that was required to make the total amount of 5 L. At the time when the cleaning step was completed, the silver nanowires had an average length of 16.3 $\mu$m, an average diameter of 24.7 nm, and an average aspect ratio of 16,300/24.7 $\approx$ 660.

(Crossflow Filtration)

The silver nanowire-containing liquid after cleaning (silver nanowire content: 0.01% by mass) was subjected to crossflow filtration using a porous ceramic filter for removing wires having short lengths. The operation is referred to as "purification". The purification was performed by crossflow filtration while replenishing pure water to the circulation flow channel in the same amount as the liquid discharged outside the circulation flow channel. After completing the purification, the crossflow filtration was performed for a certain period of time in the state that the replenishment of pure water was terminated, and the circulation was performed while replenishing the silver nanowire dispersion liquid to the tank in an amount corresponding to the amount of the liquid discharged as a filtrate, so as to increase the silver nanowire content in the liquid to 0.3% by mass. According to the manner, a silver nanowire dispersion liquid having silver nanowires dispersed in pure water was obtained. The silver nanowires in the dispersion liquid had an average length of 18.2 $\mu$m, an average diameter of 26.9 nm, and an average aspect ratio of 18,200/26.9 $\approx$ 677. The diameter was measured with an SEM micrograph obtained with a high-resolution FE-SEM (field emission scanning microscope, S-4700, produced by Hitachi, Ltd.) in the ultra-high resolution mode with a focal length of 7 mm, an acceleration voltage of 20 kV, and a magnification of 150,000, and the length was measured with an SEM micrograph obtained in the normal mode with a focal length of 12 mm, an acceleration voltage of 3 kV, and a magnification of 2,500 (which were the same as in the examples below).

(Ink Formation)

HPMC (hydroxypropyl methyl cellulose, produced by Shin-Etsu Chemical Co., Ltd.) was prepared as a thickener. The HPMC has, in terms of percentage by mass, 2.4% of water, 23.1% of a methoxy group, and 7.6% of a hydroxypropoxy group. Powder of HPMC was added to hot water under strong stirring with a stirrer, which was then spontaneously cooled to 40°C under continuous strong stirring, and then cooled to 10°C or less with a chiller. The liquid after stirring was filtered with a metallic mesh having an aperture of 100 $\mu$m to remove gelled insoluble components, thereby providing an aqueous solution having HPMC dissolved therein.

2-Propanol (isopropyl alcohol) was prepared as an alcohol to be added for providing a mixed solvent of water and an alcohol.

An emulsion containing a urethane resin as a major component (NeoPac™ E-125, produced by DSM Coating Resins, LLC) was prepared as a binder.

In one vessel with a lid, the silver nanowire dispersion liquid (containing water as a medium) obtained by the aforementioned crossflow filtration, the HPMC aqueous solution, the emulsion of the binder, and 2-propanol (isopropyl alcohol) were placed, and after closing the lid, were mixed by stirring by a method of shaking the vessel vertically 100 times per minute in a stroke length of from 10 to 20 cm. The contents of the substances in the ink (ink composition) were, in terms of percentage by mass, 10.0% for 2-propanol, 0.10% for silver, 0.150% of the thickener (HPMC), and 0.067% for the binder, with the balance for water. While the silver nanowires had the organic protective agent attached to the surface thereof, the content of the organic protective agent in the ink was extremely small as compared to the aforementioned components, and thus was ignored in the ink composition (which was the same as in the examples below).

(Silver Nanowire Conductive Layer)

A PET film substrate (Cosmoshine (trade name) A4100, produced by Toyobo Co., Ltd.) having a thickness of 100 $\mu$m and a size of 150 mm $\times$ 200 mm was prepared. The silver nanowire ink was coated on one surface of the PET film substrate with a bar coater with a wire diameter of 12 mil (approximately 305 $\mu$m) to form a coated film having an area of 100 mm $\times$ 50 mm. After coating, the coated film was dried at 120°C for 1 minute to provide a transparent silver nanowire conductive layer. The silver nanowire conductive layer was measured for the surface resistance (sheet resistance) with a non-contact sheet resistance measuring device (EC-80P, produced by Napson Corporation) from the side of the PET film substrate opposite to the surface having the silver nanowire conductive layer formed thereon. The sheet resistance is referred to as a "sheet resistance before forming a protective layer". The results are shown in Table 1.

(Transparent Protective Layer)

As a coating material for forming a transparent protective layer, an ultraviolet ray-curable resin containing an acrylic resin as a major component was mixed with PGME (polypropylene glycol monomethyl ether) to prepare a coating liquid having a resin content of 30% by mass. The coating liquid was coated on the silver nanowire conductive layer having been formed on the PET film substrate. The coating liquid was coated with an applicator having a blade gap set to 67 $\mu$m by a non-contact coating method through manual sweeping. After coating, the coated film was dried at 80°C for 5 minutes to form a transparent protective layer. Immediately after drying, the silver nanowire conductive layer after forming the transparent protective layer was measured for the surface resistance (sheet resistance) in the same manner as above. The sheet resistance is referred to as a "sheet resistance immediately after forming a protective layer". The results are shown in Table 1.

A specimen obtained by forming the silver nanowire conductive layer and the transparent protective layer on the PET film substrate in the aforementioned manner was placed in an air atmosphere at 23°C and stored for 24 hours. The silver nanowire conductive layer after 24 hours from the formation of a transparent protective layer was measured for the surface resistance (sheet resistance) in the same manner as above. The sheet resistance is referred to as a "sheet resistance after 24 hours". The results are shown in Table 1.

(Change Rate of Sheet Resistance)

For the evaluation of the conductivity retention capability of the silver nanowire conductive layer after coating the coating liquid for forming a transparent protective layer, the "change rage of the sheet resistance" was obtained according to the following expressions (2) and (3).

$$A_0 = (R_0 - R_{INIT}) / R_{INIT} \times 100 \qquad (2)$$

$$A_{24} = (R_{24} - R_{INIT}) / R_{INIT} \times 100 \qquad (3)$$

wherein

$R_{INIT}$ represents the sheet resistance before forming a protective layer ($\Omega$/sq);
$R_0$ represents the sheet resistance immediately after forming a protective layer ($\Omega$/sq);
$R_{24}$ represents the sheet resistance after 24 hours from the formation of a protective layer ($\Omega$/sq);
$A_0$ represents the change rate of the sheet resistance immediately after forming a protective layer (%); and
$A_{24}$ represents the change rate of the sheet resistance after 24 hours (%).

In the test, the change rate of the sheet resistance after 24 hours $A_{24}$ of 5.0% or less can be evaluated that the decrease of the conductivity of the silver nanowire conductive layer caused by the swelling of the thickening component is suppressed to a low level, and the silver nanowire conductive layer has an excellent conductivity retention capability against an organic solvent. A specimen having $A_{24}$ or 4.0% or less can be said to have a particularly excellent conductivity retention capability. The results are shown in Table 1.

[Example 2]

An experiment was performed in the same manner as in Example 1 except that in the process of ink formation, HPMC (produced by Shin-Etsu Chemical Co., Ltd.) having, in terms of percentage by mass, 1.0% of water, 23.0% of a methoxy group, and 8.1% of a hydroxypropoxy group was used as a thickener, and the content of the thickener (HPMC) in the ink was changed from 0.150% to 0.133%, and the change rate of the sheet resistance was obtained. The results are shown in Table 1 (which is the same as in the examples below).

[Example 3]

An experiment was performed in the same manner as in Example 2 except that in the process of ink formation, HPMC (produced by Shin-Etsu Chemical Co., Ltd.) having, in terms of percentage by mass, 1.0% of water, 23.2% of a methoxy group, and 7.6% of a hydroxypropoxy group was used as a thickener, and the change rate of the sheet resistance was obtained.

[Example 4]

An experiment was performed in the same manner as in Example 2 except that in the process of ink formation, HPMC (produced by Shin-Etsu Chemical Co., Ltd.) having, in terms of percentage by mass, 6.8% of water, 22.2% of a methoxy group, and 12.8% of a hydroxypropoxy group was used as a thickener, and the change rate of the sheet resistance was obtained.

[Example 5]

An experiment was performed in the same manner as in Example 2 except that in the process of ink formation, HPMC (produced by Shin-Etsu Chemical Co., Ltd.) having, in terms of percentage by mass, 0.7% of water, 23.2% of a methoxy group, and 7.8% of a hydroxypropoxy group was used as a thickener, and the change rate of the sheet resistance was obtained.

[Example 6]

An experiment was performed in the same manner as in Example 5 except that in the process of ink formation, the content of the thickener (HPMC) in the ink was changed from 0.133% to 0.100%, and the change rate of the sheet resistance was obtained.

[Example 7]

An experiment was performed in the same manner as in Example 5 except that in the process of ink formation, the content of the thickener (HPMC) in the ink was changed from 0.133% to 0.075%, and the change rate of the sheet resistance was obtained.

[Example 8]

An experiment was performed in the same manner as in Example 5 except that in the process of ink formation, the content of the thickener (HPMC) in the ink was changed from 0.133% to 0.050%, and the change rate of the sheet resistance was obtained.

[Example 9]

An experiment was performed in the same manner as in Example 2 except that in the process of ink formation, HPMC (produced by Shin-Etsu Chemical Co., Ltd.) having, in terms of percentage by mass, 1.2% of water, 23.2% of a methoxy group, and 7.4% of a hydroxypropoxy group was used as a thickener, and the change rate of the sheet resistance was obtained.

[Example 10]

An experiment was performed in the same manner as in Example 9 except that in the process of ink formation, the content of the thickener (HPMC) in the ink was changed from 0.133% to 0.100%, and the change rate of the sheet resistance was obtained.

[Example 11]

An experiment was performed in the same manner as in Example 9 except that in the process of ink formation, the content of the thickener (HPMC) in the ink was changed from 0.133% to 0.075%, and the change rate of the sheet resistance was obtained.

[Example 12]

An experiment was performed in the same manner as in Example 9 except that in the process of ink formation, the content of the thickener (HPMC) in the ink was changed from 0.133% to 0.050%, and the change rate of the sheet resistance was obtained.

[Example 13]

An experiment was performed in the same manner as in Example 1 except that in the process of ink formation, HPMC (produced by Shin-Etsu Chemical Co., Ltd.) having, in terms of percentage by mass, 3.3% of water, 19.6% of a methoxy group, and 8.4% of a hydroxypropoxy group was used as a thickener, and the content of the thickener (HPMC) in the ink was changed from 0.150% to 0.088%, and the change rate of the sheet resistance was obtained.

[Example 14]

An experiment was performed in the same manner as in Example 13 except that in the process of ink formation, HPMC (produced by Shin-Etsu Chemical Co., Ltd.) having, in terms of percentage by mass, 3.6% of water, 22.9% of a methoxy group, and 4.3% of a hydroxypropoxy group was used as a thickener, and the change rate of the sheet resistance was obtained.

[Example 15]

An experiment was performed in the same manner as in Example 13 except that in the process of ink formation, HPMC (produced by Shin-Etsu Chemical Co., Ltd.) having, in terms of percentage by mass, 4.2% of water, 19.9% of a methoxy group, and 4.5% of a hydroxypropoxy group was used as a thickener, and the change rate of the sheet resistance was obtained.

[Comparative Example 1]

An experiment was performed in the same manner as in Example 1 except that in the process of ink formation, HPMC (produced by Shin-Etsu Chemical Co., Ltd.) having, in terms of percentage by mass, 0.6% of water, 28.9% of a methoxy group, and 8.8% of a hydroxypropoxy group was used as a thickener, and the change rate of the sheet resistance was obtained. The HPMC had an amount of a methoxy group exceeding the scope of the invention.

[Comparative Example 2]

An experiment was performed in the same manner as in Example 1 except that in the process of ink formation, HPMC (produced by Shin-Etsu Chemical Co., Ltd.) having, in terms of percentage by mass, 0.5% of water, 27.9% of a methoxy group, and 6.3% of a hydroxypropoxy group was used as a thickener, and the change rate of the sheet resistance was obtained. The HPMC had an amount of a methoxy group exceeding the scope of the invention.

[Example 16]

An experiment was performed in the same manner as in Example 1 except that in the process of ink formation, HEMC (hydroxyethyl methyl cellulose, produced by Shin-Etsu Chemical Co., Ltd.) having, in terms of percentage by mass, 2.4% of water, 22.8% of a methoxy group, and 7.1% of a hydroxyethoxy group was used instead of the HPMC as a thickener, and the change rate of the sheet resistance was obtained.

[Example 17]

An experiment was performed in the same manner as in Example 16 except that in the process of ink formation, HEMC (produced by Shin-Etsu Chemical Co., Ltd.) having, in terms of percentage by mass, 4.7% of water, 23.3% of a methoxy group, and 10.3% of a hydroxyethoxy group was used as a thickener, and the content of the thickener (HEMC) in the ink was changed from 0.150% to 0.133%, and the change rate of the sheet resistance was obtained.

[Comparative Example 3]

An experiment was performed in the same manner as in Example 1 except that in the process of ink formation, MC (methyl cellulose, produced by Shin-Etsu Chemical Co., Ltd.) having, in terms of percentage by mass, 0.9% of water and 29.5% of a methoxy group, and having no hydroxypropoxy group or hydroxyethoxy group was used instead of the HPMC as a thickener, and the change rate of the sheet resistance was obtained. The MC had an amount of a methoxy group exceeding the scope of the invention.

[Example 18]

At ordinary temperature, 89.6 g of an ethylene glycol solution having a content of tetrabutylammonium chloride (produced by Wako Pure Chemical Industries, Ltd.) of 5% by mass and 267.447 g of PVP (polyvinylpyrrolidone, weight average molecular weight: 55,000) were added to 8,615.38 g of ethylene glycol, and dissolved to provide a solution A. In a separate vessel, 67.96 g of silver nitrate was added to 344.615 g of ethylene glycol as an alcohol solvent, and dissolved under stirring at 25°C to provide a silver-containing liquid (solution B). The solution A was placed in a reaction vessel and heated from ordinary temperature to 90°C under stirring at 175 rpm, and then the entire amount of the solution B was added from two addition ports to the solution A over 1 minute. After completing the addition of the solution B, the reaction liquid was further retained under the stirring state at 90°C for 24 hours. Thereafter, the reaction liquid was cooled to ordinary temperature. A 1 L portion was collected from the reaction liquid having been cooled to ordinary temperature, and transferred to a PFA bottle having a capacity of 35 L, to which 20 kg of acetone was added, followed by stirring for 15 minutes. Thereafter, the mixture was allowed to stand for 24 hours.
After standing, a concentrate and a supernatant were observed, and the supernatant was removed to recover the concentrate. An appropriate amount of a 1% by mass PVP aqueous solution was added to the resulting concentrate, followed by stirring for 3 hours, and then it was confirmed that the silver nanowires were redispersed. After stirring, 2 kg of acetone was added thereto, followed by stirring for 10 minutes, and then the mixture was allowed to stand. After standing, a concentrate and a supernatant were newly observed, and the supernatant was removed to recover the concentrate. 160 g of pure water was added to the resulting concentrate to redisperse the silver nanowires. 2 kg of acetone was added to the redispersed silver nanowire dispersion liquid, and then the mixture was stirred for 30 minutes and then allowed to stand. After standing, a concentrate and a supernatant were newly observed, and the supernatant was removed to recover the concentrate. An appropriate amount of a 0.5% by mass PVP aqueous solution was added to the resulting concentrate, followed by stirring for 12 hours.
The silver nanowire-containing liquid having been stirred for 12 hours was diluted with pure water to control the silver nanowire content to 0.01% by mass. A silver nanowire-containing liquid after cleaning was thus obtained in this manner. The silver nanowires were prepared in an amount that was required to make the total amount of 5 L. At the time when the cleaning step was completed, the silver nanowires had an average length of 13.5 $\mu$m, an average diameter of 29.1 nm, and an average aspect ratio of $13,500/29.1 \approx 463$.
Subsequently, crossflow filtration was performed in the same manner as in Example 1, and the silver nanowires in the dispersion liquid after completing the crossflow filtration had an average length of 15.1 $\mu$m, an average diameter of 31.2 nm, and an average aspect ratio of $15,100/31.2 \approx 484$.
An experiment was performed in the same manner as in Example 1 by using a silver nanowire ink formed in the same manner as in Example 1, and the change rate of the sheet resistance was obtained.

[Comparative Example 4]

An experiment was performed in the same manner as in Comparative Example 1 except that the silver nanowires obtained in the same manner as in Example 18 (i.e., the silver nanowires using PVP as the organic protective agent in the synthesis) was applied, and the change rate of the sheet resistance was obtained.

[Example 19]

An experiment was performed in the same manner as in Example 1 except that in the process of ink formation, the content of 2-propanol in the ink in terms percentage by mass was changed from 10.0% to 30.0%, and the change rate of the sheet resistance was obtained.

[Table 1]

| Example No. | Kind of thickener | Constitution of thickener (% by mass) | | | | Composition of silver nanowire ink (% by mass) | | | | | Sheet resistance (Ω/sq) | | | Change rate of sheet resistance (%) | |
|---|---|---|---|---|---|---|---|---|---|---|---|---|---|---|---|
| | | Water | Methoxy group | Hydroxypro-poxy group | Hydrox-yethoxy group | Water | Alcohol | Silver | Thickener | Binder | Before forming protective layer $R_{INIT}$ | Immediately after forming protective layer $R_0$ | After 24 hours $R_{24}$ | Immediately after forming protective layer $A_0$ | After 24 hours $A_{24}$ |
| Example 1 | HPMC | 2.4 | 23.1 | 7.6 | - | balance | 10.0 | 0.10 | 0.150 | 0.067 | 48.1 | 48.6 | 48.9 | 1.0 | 1.7 |
| Example 2 | | 1.0 | 23.0 | 8.1 | - | balance | 10.0 | 0.10 | 0.133 | 0.067 | 49.1 | 50.4 | 50.8 | 2.6 | 3.5 |
| Example 3 | | 1.0 | 23.2 | 7.6 | - | balance | 10.0 | 0.10 | 0.133 | 0.067 | 44.7 | 45.5 | 45.7 | 1.8 | 2.2 |
| Example 4 | | 6.8 | 22.2 | 12.8 | - | balance | 10.0 | 0.10 | 0.133 | 0.067 | 46.5 | 48.4 | 48.7 | 4.1 | 4.7 |
| Example 5 | | 0.7 | 23.2 | 7.8 | - | balance | 10.0 | 0.10 | 0.133 | 0.067 | 47.4 | 48.7 | 48.9 | 2.7 | 3.2 |
| Example 6 | | | | | | balance | 10.0 | 0.10 | 0.100 | 0.067 | 47.8 | 49.4 | 49.5 | 3.3 | 3.6 |
| Example 7 | | | | | | balance | 10.0 | 0.10 | 0.075 | 0.067 | 47.6 | 48.5 | 48.6 | 1.9 | 2.1 |
| Example 8 | | | | | | balance | 10.0 | 0.10 | 0.050 | 0.067 | 48.2 | 49.6 | 49.7 | 2.9 | 3.1 |
| Example 9 | | 1.2 | 23.2 | 7.4 | - | balance | 10.0 | 0.10 | 0.133 | 0.067 | 47.6 | 47.6 | 48.1 | 0.0 | 1.1 |
| Example 10 | | | | | | balance | 10.0 | 0.10 | 0.100 | 0.067 | 46.9 | 47.2 | 47.9 | 0.6 | 2.1 |
| Example 11 | | | | | | balance | 10.0 | 0.10 | 0.075 | 0.067 | 46.7 | 48.3 | 48.4 | 3.4 | 3.6 |
| Example 12 | | | | | | balance | 10.0 | 0.10 | 0.050 | 0.067 | 48.0 | 49.3 | 49.5 | 2.7 | 3.1 |
| Example 13 | | 3.3 | 19.6 | 8.4 | - | balance | 10.0 | 0.10 | 0.088 | 0.067 | 50.5 | 51.9 | 52.1 | 2.8 | 3.2 |
| Example 14 | | 3.6 | 22.9 | 4.3 | - | balance | 10.0 | 0.10 | 0.088 | 0.067 | 50.7 | 52.9 | 52.8 | 4.3 | 4.1 |
| Example 15 | | 4.2 | 19.9 | 4.5 | - | balance | 10.0 | 0.10 | 0.088 | 0.067 | 50.4 | 52.0 | 52.1 | 3.2 | 3.4 |
| Comparative Example 1 | | 0.6 | 28.9 | 8.8 | - | balance | 10.0 | 0.10 | 0.150 | 0.067 | 47.0 | 49.6 | 51.0 | 5.5 | 8.5 |
| Comparative Example 2 | | 0.5 | 27.9 | 6.3 | - | balance | 10.0 | 0.10 | 0.150 | 0.067 | 46.1 | 48.7 | 49.9 | 5.6 | 8.2 |
| Example 16 | HEMC | 2.4 | 22.8 | - | 7.1 | balance | 10.0 | 0.10 | 0.150 | 0.067 | 46.4 | 47.5 | 48.1 | 2.4 | 3.7 |
| Example 17 | | 4.7 | 23.3 | - | 10.3 | balance | 10.0 | 0.10 | 0.133 | 0.067 | 47.4 | 48.9 | 49.1 | 3.2 | 3.6 |

(continued)

| Example No. | Kind of thickener | Constitution of thickener (% by mass) | | | | Composition of silver nanowire ink (% by mass) | | | | | Sheet resistance ($\Omega$/sq) | | | Change rate of sheet resistance (%) | |
|---|---|---|---|---|---|---|---|---|---|---|---|---|---|---|---|
| | | Water | Methoxy group | Hydroxypro-poxy group | Hydrox-yethoxy group | Water | Alcohol | Silver | Thickener | Binder | Before forming protective layer $R_{INIT}$ | Immediately after forming protective layer $R_0$ | After 24 hours $R_{24}$ | Immediately after forming protective layer $A_0$ | After 24 hours $A_{24}$ |
| Comparative Example 3 | MC | 0.9 | 29.5 | - | - | balance | 10.0 | 0.10 | 0.150 | 0.067 | 49.6 | 50.9 | 54.7 | 2.6 | 10.3 |
| Example 18 | HPMC | 2.4 | 23.1 | 7.6 | - | balance | 10.0 | 0.10 | 0.150 | 0.067 | 48.3 | 50.1 | 50.4 | 3.7 | 4.3 |
| Comparative Example 4 | | 0.6 | 28.9 | 8.8 | - | balance | 10.0 | 0.10 | 0.150 | 0.067 | 47.4 | 50.1 | 51.5 | 5.7 | 8.6 |
| Example 19 | | 2.4 | 23.1 | 7.6 | - | balance | 30.0 | 0.10 | 0.150 | 0.067 | 47.7 | 48.2 | 48.6 | 1.0 | 1.9 |

It is understood that the silver nanowire ink using a water soluble cellulose ether having an amount of a methoxy group in the range of the invention has a capability that in a silver nanowire conductive film formed therewith, the increase of the sheet resistance caused through contact with an organic solvent is suppressed to a low level even after 24 hours (see Examples). It is considered that this is because the affinity to an organic solvent due to a methoxy group is suppressed by strictly restricting the amount of a methoxy group, and the swelling phenomenon of the water soluble cellulose ether is prevented from occurring. It is also considered from the comparison between Example 4 using HPMC having a relatively large amount of a hydroxypropoxy group and the other examples that the restriction of the amount of a hydroxypropoxy group or the amount of a hydroxyethoxy group is also effective for suppressing the increase of the sheet resistance caused through contact with an organic solvent.

Comparative Examples 1, 2, and 4 use the water soluble cellulose ether having a large amount of a methoxy group. The thickener of this type has advantages including the relative easiness in the management of the ink formation condition and the like due to the excellent water solubility thereof, and thus has been generally said to be convenient in use as a thickener for a silver nanowire ink. However, the sheet resistance is largely increased through contact with the organic solvent immediately after the formation of the protective layer, and the sheet resistance is further increased after 24 hours. This phenomenon that is considered to be caused by the swelling has been overlooked. Comparative Example 3 uses MC (methyl cellulose) having no hydroxypropoxy group or hydroxyethoxy group as a thickener. In this comparative example, the MC having a large amount of a methoxy group is used for sufficiently ensuring the water solubility. As a result, the increase of the sheet resistance is not noticeable immediately after the formation of the protective layer, but is significantly increased after 24 hours.

## Claims

1. A silver nanowire ink comprising a water soluble cellulose ether having a methoxy group, and silver nanowires, in an aqueous solvent, the water soluble cellulose ether having a mass proportion of a methoxy group of from 16.0 to 25.0%.

2. The silver nanowire ink according to claim 1, wherein the silver nanowire ink has a mixing ratio of the water soluble cellulose ether of from 0.1 to 5.0 parts by mass per 1.0 part by mass of silver.

3. The silver nanowire ink according to claim 1, wherein the aqueous solvent is a mixed solvent of water and an alcohol, and the silver nanowire ink has a content of the alcohol of from 1.0 to 35.0% by mass.

4. The silver nanowire ink according to claim 1, wherein the silver nanowires have an average length of 10.0 $\mu$m or more and an average aspect ratio shown by a ratio of an average length and an average diameter of 200 or more.

5. The silver nanowire ink according to claim 1, wherein the silver nanowires are coated with a copolymer of vinylpyrrolidone and a hydrophilic monomer.

6. The silver nanowire ink according to claim 1, wherein the silver nanowires are coated with PVP (polyvinylpyrrolidone).

7. The silver nanowire ink according to claim 1, wherein the silver nanowire ink contains one or more of HPMC (hydroxypropyl methyl cellulose) and HEMC (hydroxyethyl methyl cellulose) as the water soluble cellulose ether.

8. The silver nanowire ink according to claim 1, wherein the water soluble cellulose ether having a methoxy group is HPMC (hydroxypropyl methyl cellulose), and the HPMC has a mass proportion of a methoxy group of from 16.0 to 25.0% and a mass proportion of a hydroxypropoxy group of 10.0% or less.

9. The silver nanowire ink according to claim 1, wherein the water soluble cellulose ether having a methoxy group is HEMC (hydroxyethyl methyl cellulose), and the HEMC has a mass proportion of a methoxy group of from 16.0 to 25.0% and a mass proportion of a hydroxyethoxy group of 12.0% or less.

## INTERNATIONAL SEARCH REPORT

| International application No. |
| --- |
| PCT/JP2018/007198 |

### A. CLASSIFICATION OF SUBJECT MATTER

Int. Cl. C09D11/52(2014.01)i, B22F1/02(2006.01)i, B22F9/00(2006.01)i, C08K7/06(2006.01)i, C08K9/04(2006.01)i, C08L1/28(2006.01)i

According to International Patent Classification (IPC) or to both national classification and IPC

### B. FIELDS SEARCHED

Minimum documentation searched (classification system followed by classification symbols)
Int. Cl. C09D11/52, B22F1/02, B22F9/00, C08K7/06, C08K9/04, C08L1/28

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)
CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X<br>A | WO 2014/196354 A1 (SEIKO PMC CORPORATION) 11 December 2014, claims, paragraphs [0062], [0063], examples 9, 12, 15, 17, 20, 22, 35 & US 2016/0118156 A1, claims, paragraphs [0094], [0095], examples 9, 12, 15, 17, 20, 22, 35 & CN 105246962 A & KR 10-2016-0017063 A & TW 201446904 A | 1-8<br>9 |
| X<br>A | JP 2013-196918 A (JNC CORP.) 30 September 2013, claims, paragraphs [0097], [0117], examples 1, 3-13 & US 2013/0251983 A1, claims, paragraphs [0094], [0115], examples 1, 3-13 & KR 10-2013-0107219 A | 1-8<br>9 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10.05.2018 | Date of mailing of the international search report<br>29.05.2018 |
| --- | --- |
| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2018/007198

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 2013-170210 A (JNC CORP.) 02 September 2013, claims, paragraph [0060], examples & US 2013/0216826 A1, claims, paragraph [0101], examples & KR 10-2013-0096174 A | 1-8<br>9 |
| X<br>A | JP 2013-125684 A (JNC CORP.) 24 June 2013, claims, paragraphs [0095], [0116], examples 1-15 & US 2013/0153829 A1, claims, paragraphs [0111], [0133], examples 1-15 & KR 10-2013-0069409 A | 1-8<br>9 |
| X<br>A | JP 2013-16455 A (JNC CORP.) 24 January 2013, claims, paragraphs [0088], [0102], examples 1-31 & US 2012/0183768 A1, claims, paragraphs [0096], [0111], examples 1-31 & KR 10-2012-0082355 A | 1-8<br>9 |
| A | JP 2006-335771 A (TAKEDA CHEMICAL INDUSTRIES, LTD.) 14 December 2006, claims, paragraphs [0037], [0038], [0065], examples 1-4 (Family: none) | 1-9 |
| A | JP 2006-160702 A (HOKKO CHEMICAL INDUSTRY CO., LTD.) 22 June 2006, paragraph [0022] (Family: none) | 1-9 |
| A | WO 2015/008676 A1 (SEIKO PMC CORPORATION) 22 January 2015, (Family: none) | 1-9 |
| A | WO 2015/133453 A1 (DOWA HOLDINGS CO., LTD.) 11 September 2015, & US 2016/0368049 A1 & EP 3115135 A1 & CN 106068166 A & KR 10-2016-0129895 A & TW 201544610 A | 1-9 |
| A | JP 2013-151644 A (CAMBRIOS TECHNOLOGIES CORP.) 08 August 2013, & US 2007/0074316 A1 & WO 2007/022226 A2 & EP 1922759 A2 & CA 2618794 A & KR 10-2008-0066658 A & CN 101292362 A | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013202911 A
- JP 2014133722 A

- JP 2015180772 A